# EUROPEAN PATENT SPECIFICATION

(11) **EP 4 470 195 B1**
(45) Date of publication and mention of the grant of the patent: **09.09.2026**
(21) Application number: 23701566.4
(22) Date of filing: 27.01.2023
(51) Int. Cl.: H04L 67/51, H04W 84/10, H04L 67/14

(54) **SERVICE CONNECTION INFORMATION SYSTEM FOR USING SERVICES IN MULTIPLE LOCAL NETWORKS**
DIENSTVERBINDUNGSINFORMATIONSSYSTEM ZUR NUTZUNG VON DIENSTEN IN MEHREREN LOKALEN NETZEN
SYSTÈME D'INFORMATIONS DE CONNEXION DE SERVICE PERMETTANT D'UTILISER DES SERVICES DANS DES RÉSEAUX LOCAUX MULTIPLES

(30) Priority: 27.01.2022 EP 22153777
(43) Date of publication of application: 04.12.2024
(60) Divisional application: 26196044.7
(73) Proprietor: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: WILKENS, Jarmo Theodore, 29002 Málaga (ES); SHIFERAW, Yonathan, 2521 SC Den Haag (NL); HEIJNEN, Pascal Mathieu Agnes Marie, 6132 AW Sittard (NL)
(74) Representative: De Vries & Metman
(86) International application number: PCT/EP2023/051963
(87) International publication number: WO 2023/144283

(56) References cited:
- US-A1- 2013 205 018
- US-A1- 2021 345 231
- "3rd Generation Partnership Project; Technical Specification Group Services and System Aspects; Service requirements for the 5G system; Stage 1 (Release 18)", vol. SA WG1, no. V18.4.0, 24 September 2021 (2021-09-24), pages 1 - 107, XP052056697, Retrieved from the Internet <URL:https://ftp.3gpp.org/Specs/archive/22_series/22.261/22261-i40.zip 22261-i40.doc> [retrieved on 20210924]
- ANONYMOUS, 20 January 2013 (2013-01-20), XP055560799, Retrieved from the Internet <URL:https://web.archive.org/web/20130120172922/http://blogs.cisco.com/getyourbuildon/network-wide-bonjour-how-would-you-support-bonjour-across-multiple-vlans/> [retrieved on 20190222]

## Description

### TECHNICAL FIELD

The present disclosure relates to a service connection information system, a telecommunication system configured to support such a service connection information system and to an electronic device configured to use such a service connection information system. In particular, the disclosure relates to a service connection information system enabling an electronic device to make use of services provided in multiple local networks.

### BACKGROUND

People or organizations may have established multiple local customer networks, such as customer premises networks, CPNs, or personal Internet of Things, loT, networks, PINs, if the network comprises specific loT devices. Such local networks are typically connected to a telecommunications network via a gateway device, such as a 5G residential gateway (5G-RG), an enhanced residential gateway (eRG) for a CPN or a PIN element with gateway capability (PEGC) of a PIN. CPNs and PINs are described in 3GPP TS 22.261, v18.4.0, section 6. 3rd Generation Partnership Project; Technical Specification Group Services and System Aspects; Service requirements for the 5G system; Stage 1 (Release 18)", 3GPP STANDARD; TECHNICAL SPECIFICATION; 3GPP TS 22.261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V18.4.0 24 September 2021 (2021-09-24), pages 1-107, XP052056697.

Devices in such local networks may offer one or more services and may therefore be referred to as service providing devices. Such services may be consumed by electronic devices within or outside the coverage of a local network. Examples of services are entertainment (e.g. gaming, TV, internet), surveillance, telepresence, office equipment (e.g. printers, file servers), climate/energy control, services from wearables, etc. It is noted that electronic devices may themselves offer services to other devices and, hence, act a service providing devices.

Service providing devices may advertise the availability of their services in the local network and electronic device may discover the availability of such services from these devices. For example, UPnP is a set of non-3GPP networking protocols that enable devices in the same network to discover each other's services and capabilities. A well-known protocol for service discovery is the SSDP, whereby a newly added device advertises its services and capabilities to other devices in the network via control point(s) (UPnP client(s)) using multicast HTTP over UDP. Multicast, however, may form a problem with increasing device density in a customer premise where network resources and energy will inefficiently be consumed during service discovery.

Multiple local customer networks of a single customer may be deployed in the same physical location (e.g. in an office building or in a home) or at different physical locations (e.g. in a home and in an office, or HQ and local-offices). The networks may have overlapping coverage and may use different radio frequencies for communication. Some communication may make use of radio frequencies allocated to a telecommunications network connected to these local networks. Other communications may make use of a wireline connection to a gateway device. Hence, the local networks can be accessible from some locations whereas they are not available from other locations.

Different services may be provided from multiple local customer networks due to, for example, technical reasons, capabilities, subscription level or user preferences. As an example, one local network may provide entertainment services, such as gaming or video stream, whereas another local network may provide home automation services, such as light control or heating control. In some instances, an electronic device may want to enjoy services from multiple local networks simultaneously.

To use multiple local networks with UPnP, it is known to use a UPnP proxy per local network to enable devices to discover each other. A UPnP proxy between networks act as a bridge making it appear as one big network to other UPnP devices. This increases complexity and inefficiency with every added local network.

US 2021/345231 A1 describes methods and systems for a service discovery gateway to interoperate with a client device. The service discovery gateway receives a first message, originating from the client device. The message comprising at least a service discovery query to the service discovery gateway. Based at least in part on receiving the first message, the service discovery gateway sends a second message comprising at least a first indication of at least one service provider corresponding to the service discovery query. The service discovery gateway determines a condition is met based at least in part on an elapsed time associated with the second message. The service discovery gateway sends a third message based at least in part on the determining, the third message comprising at least a second indication of at least one service provider corresponding to the service discovery query.

Anonymous, 20 January 2013 (2023-01-20), XP055560799, retrieved from the Internet: U RL: https://web.archive.org/web/20130120 172922/http://blogs .cisco. com/get you rbu i Idon/networ-wide-bonjour-how-would-you-support-bonjour-across-multiple-vlans/ proposes three approaches to support Bonjour^{®} discovery across multiple VLANS.

US 2013/0205018 A1 discloses that providing service discovery in a communication network comprises adding service discovery information for a first network to a domain name system (DNS). The service discovery information provides for devices to discover devices and services that the devices support. Service information is discovered from the service discovery information over the communication network. One or more services from the first network are selected from the discovered service information. One or more services are accessed over the communication network from the first local network.

### SUMMARY

The invention is set out in the appended set of claims.

The inventors have considered that an electronic device may need to discover and access services in multiple local customer networks simultaneously, even when the electronic device is not directly connected to all local customer networks or is not connected to such local customer networks at all.

To that end, one aspect of the present disclosure pertains to a service connection information system according to claim 1. The service connection information system is configured to store service profile information regarding at least a first service of a first service providing device in a first local network and a second service of a second service providing device in a second local network. The service connection information system also stores connectivity information for an electronic device to enjoy the first service from the first service providing device in the first local network and the second service from the second service providing device in the second local network. The service connection information system is further configured to provide the service profile information and connectivity information to the electronic device to enable the electronic device to enjoy the first service and the second service.

It should be appreciated that the service connection information system may store service profile information and connectivity information for more than two local networks.

It should be appreciated that the service profile information and connectivity information may be requested by the electronic device or be pushed to the electronic device.

The service connection information system provides information to the electronic device to discover and access services provided from multiple local customer networks, such a CPNs and PINs. The connectivity information informs the electronic device how to connect to a particular local network from which the desired service is provided. The service connection information system may be considered a repository that operates for multiple local customer networks and assists the electronic device to establish a connection, possibly simultaneously to multiple local networks to enjoy multiple services.

The inventors are aware of the existence of a 3GPP core network function, known as a network repository function, NRF, that allows other network functions in a 5G core network, 5GC, to discover and select one another. The NRF provides a repository of the profiles of the network functions available in the network. The information is provided to the network function service consumer (i.e. another network function) in the discovery procedure and provides information for the network function service consumer to use the service based interface of the selected network function and the network function service. The NRF is updated with new profile information whenever a new function connects to the 5GC or when an existing function changes its profile. The NRF differs from the service connection information system in that the NRF supports service discovery with authorization between network functions within the 5GC, while the service connection information system provides a service discovery solution for multiple local networks between an electronic device and service providing devices.

It should be appreciated that the service profile information comprises information relevant to provide a service to an electronic device. Such information may include one or more of a Device ID of the service providing device, a Device Type of the service providing device (e.g. printer, storage, gaming console, security camera, heating control, etc.), local network ID, local network type (e.g. CPN, PIN), address of the service providing device, capability information of the service providing device, name of the service providing device, service authorization information for the electronic device to ensure that the electronic device is authorized to access the service provided by the service providing device.

It should also be appreciated that the service connection information system may not be involved in the actual data plane traffic and therefore provides a scalable solution tailored for customers having deployed multiple local networks.

It should also be appreciated that the connectivity information from the service connection information system contains connectivity information between service providing devices and an electronic device for multiple local networks that can be used in establishing a connectivity route. When the service connection information system cannot access a telecommunication system, the service connection information system has sufficient connectivity information available to inform the electronic device how to connect to the service providing device to consume the corresponding service. If the service connection information system has access to the telecommunication system, the telecommunication system may assist in providing the connectivity information and to establish the data transfer path. The telecommunication system can assist in establishing the required connections, including sending credentials to the local network and the electronic device. Credentials may also be stored in and used from the service connection information system, for example after these have been received from the telecommunication system first.

In one option of the invention, the connectivity information may include information that enables a direct device-to-device (D2D) connection between the electronic device and a service providing device providing the service in a local network. Such a direct connection may be established when the electronic device is nearby the service providing device (but not necessarily in the same local network). The connectivity information may include information that enables a connection via a local network, for example via a radio station in the local network (such as a Premises Radio Access Station, PRAS) or via a gateway device providing access to the local network. For such a connection, the electronic device is in the same local network as the service providing device providing the service. The connectivity information may include information enabling a connection via an interconnection between the first local network and the second local network. Such an interconnection may exist by direct connections between gateway devices of the local customer networks at the customer premises or via a telecommunications network connected to the local customer networks. Such connectivity information enables the electronic device to access a service from a local network without being in the coverage of the network. For example, the electronic device may use a service provided by a first service providing device in the first local network while not being in the coverage of the first local network (but, for example, in the second local network having a second service providing device from which the electronic device also consumes a service). The connectivity information may include information enabling a connection via a telecommunications network to the first local network and a connection via the telecommunications network to the second local network. In this manner, the electronic device may enjoy services from service providing devices in the first local network and the second local network without being in the coverage of both the first local network and the second local network.

In one embodiment, the service connection information system is configured for authentication of the electronic device before providing the service profile information and connectivity information to the electronic device. This embodiment protects privacy sensitive information stored in the service connection information system. In one embodiment, the service connection information system itself may be configured to determine whether the electronic device is allowed to access information in the service connection information system, i.e. without requiring access to a telecommunications network. The customer may administrate in the service connection information system which electronic device(s) is(are) allowed to access the service connection information system.

Optionally, in one embodiment, the service connection information system is configured to communicate with a telecommunication system in a telecommunications network to enable the authentication. In this embodiment, the service connection information system may make use of authentication information stored for electronic devices in a telecommunication system, for example a subscriber information system, of the telecommunications network. The telecommunication system may store permissions for each electronic device.

In one embodiment, the service connection information system is configured to provide at least one of the service profile information and the connectivity information to the electronic device in accordance with control information. The control information may determine which service profile information and/or which connectivity information is provided to the electronic device. The control information may include customer settings defining which electronic device is provided with which information. Different electronic devices may receive different information. Hence, it is not necessary that each or any electronic device is provided with all information stored in the service connection information system or with the same information from this system. Optionally, the control information is stored in the service connection information system to enable the service connection information system itself to perform control of the information it provides to which electronic device.

The service connection information system may receive the control information, or part thereof, from other sources.

In one embodiment, the service connection information system may be configured to receive the control information from the electronic device and to provide at least one of the service profile information and the connectivity information to the electronic device in accordance with the control information. The embodiment facilitates that the electronic device indicates which information is useful for it to consume at least one service. The control information from the electronic device may, for example, indicate that the electronic device requests a complete list of the services provided in the local networks. This option may be set as a default option. It should be appreciated that further control information at the service connection information system may still limit which service profile information and/or connectivity information is provided to the electronic device. Another option is that the control information from the electronic device includes a service description that allows the service connection information system to determine service profile information and/or connectivity information that matches the service description or is most suitable and to provide appropriate information to the electronic device. Yet another option includes the electronic device to send control information indicating a device status and the service connection information system being configured to provide service profile information and/or connectivity information taking account of the device status, e.g. location and capabilities.

In one embodiment, the service connection information system may be configured to receive the control information from a telecommunication system and to provide at least one of the service profile information and the connectivity information to the electronic device in accordance with the control information. The embodiment allows the service connection information system to cooperate with a telecommunication system in the telecommunications network, such as a subscriber system, to determine the service profile information and/or connectivity information to be provided to the electronic device. It should be appreciated that control information from the telecommunication system may be stored for further use, at least for some time interval, to allow determining the information to be provided to the electronic device in the absence of good connectivity to the telecommunications network.

It should be appreciated that control information from multiple sources, e.g. from both the electronic device and the telecommunication system, may be applied by the service connection information system to determine the information to be provided to the electronic device.

In one embodiment, the service connection information system may be configured to receive service availability indications from service providing devices in the first local network or second local network. Such service advertising needs only to be transmitted to the service connection information system instead of being multicast in the local network. The transmission of the service availability indication of the service providing device may be triggered by a request, e.g. a polling request, from the service connection information system, for available services/service providing devices. The service connection information system may be updated, for example by updating at least one of the service profile information and the connectivity information in response to the service availability indication for a particular local network. The service providing device may also communicate their capabilities to the service connection information system to enable the service connection information system to provide appropriate service profile information to an electronic device.

The service connection information system may also be updated when the availability of a (new) local network is detected. For example, in one embodiment, the service connection information system may receive local network availability indications from a telecommunication system and update the corresponding service profile information and/or connectivity information accordingly. Such an indication may result from a provisioning procedure of a local network from the telecommunications network. Likewise, the service connection information system may detect the availability of a new service providing device from a service availability indication received from a telecommunication system in a telecommunications network and be updated accordingly.

It should be appreciated that the same procedure for updating the service connection information system applies, mutatis mutandis, when removing a service provisioning device from a local network and/or when removing a full local network at the customer.

In addition to service profile information and connectivity information, the service connection information system may, in one embodiment, contain further information, such as the status of service providing devices (available, reachable, secondary information like paper available in a printer, etc.), accounting and/or auditing information, electronic device capability requirements and coverage information of the first and second local network. Such further information may, for example, be used to determine the service profile information and/or connectivity information to be provided to the electronic device. For example, when the service connection information system is aware of the capabilities of the electronic device (which may be part of the control information referred to above), the service profile information and connectivity information provided to the electronic device are in accordance with the capabilities of the device. Likewise, coverage information of the first and second local networks can be used to determine connectivity information to be provided to the electronic device. Status information can be used to determine whether or not it is useful to provide service profile information of the service provisioning device to the electronic device. Accounting and auditing information assist in charging customers and enable insight in how services are run and whether expectations are met.

In one embodiment, the service connection information system is configured to maintain a record of established service connections of electronic devices. Maintaining the record may include that the service connection information system detects which and how many connections have been established between all devices. The service connection information system may use this information to control providing the service profile information and/or the connectivity information to the electronic devices. As one example, this information enables the service connection information system to control the maximum number of connections and, determine which service profile information to provide to further electronic devices accordingly. As another example, when the service connection information system is aware of all established service connections, this may be used to respond to a request from an electronic device to assist in selecting the appropriate service and/or the associated local network based on certain service descriptions, availability, load of service providing device, etc.

The established service connections, or status thereof, may also be used to determine service impact. The service connection information system may be configured to notify an electronic device that a service providing device is experiencing issues or fails to provide a service to enable the electronic device to take measures.

In one embodiment, the service connection information system may be provided in an equipment at a customer premise. For example, the service connection information system may be running in a gateway device or in a separate server device, physical or virtual, at the customer premise. The service connection information system may also be distributed over equipment at the customer premise, such as over various gateway devices for the respective local networks. In one embodiment, the service connection information system may be provided in a telecommunications network. Such an embodiment enables application of the service connection information system for multiple customers that each have their own plurality of local networks. The service connection information system may also be distributed over the customer premise equipment and the telecommunications network.

Another aspect of the disclosure involves a telecommunication system according to claim 10.

Hence, the telecommunication system may assist in configuring and maintaining the service connection information system at the customer site or within the telecommunications network using information available in the telecommunication system. Such information includes the information regarding the service providing devices and/or the gateway devices connecting the local network(s) to the telecommunications network.

In addition, or as an alternative, the telecommunication system may be configured to instantiate and/or provision the service connection information system if the local network is the first local network of a customer. In this manner, the customer possesses a service connection information system as soon as a local network is installed for that customer.

It should be appreciated that, in one embodiment, the telecommunication system is part of a 5G telecommunications network as standardized by 3GPP. The telecommunication system may include a subscriber repository and processing logic, such as a unified data management function (UDM) and/or a unified data repository (UDR), also referred to as unified data management system herein, and an authentication server function (AUSF).

It should be appreciated that provisioning of the local network from the telecommunication system includes enabling the necessary connectivity for the local network including connectivity within the local network (gateway device, service providing devices) and external to the local network (other local networks, telecommunications network, etc). over the telecommunications network. The local network may be added to the subscription database of the telecommunications network for a particular customer.

The local network may be the first local network of a customer or a further local network. For the first local network of the customer, the telecommunication system may provision the service connection information system. Provisioning of the service connection information system may entail everything required for it to provide service access, including its connectivity to the telecommunications network, authentication information, control information, functionalities and instantiating and populating the system with already known services as well as the connectivity relations.

When multiple local networks are provisioned, the telecommunication system comprises association information associating the local networks. The association information facilitates identifying local networks belonging to a customer to include services from these networks in the service connection information system. Such association information may, as an example, be a customer ID, that is the same for multiple local customer networks.

As a further example, the telecommunication system may be configured to detect the establishment of a third local network that is associated with the first and second local networks and may then add service profile information and connectivity information to the service connection information system for this third local network. The addition of further local networks may result in further updates of the service information communication system. Hence, the information in the service connection information system can be maintained up to date.

As already mentioned above from the perspective to the service connection information system, the telecommunication system may, in one embodiment, be configured to provide at least one of an authentication service/authentication information and a control service/control information to control which information is provided from the service connection information system to the electronic device.

Once the service connection information system is instantiated or updated, the telecommunications network may be configured to (further) update the service connection information system. In one embodiment, the telecommunication system is configured to update the service connection information system upon detection or removal or addition of a service providing device in the local network.

In one embodiment, the telecommunication system may be configured to provide credentials for the electronic device and the service connection information system to enable providing the service profile information and connectivity information to the electronic device. In this manner, the telecommunication system may facilitate access to the service connection information system.

Yet a further aspect of the present disclosure involves an electronic device according to claim 14. The electronic device is configured to receive service profile information and connectivity information from the service connection information system to enjoy the first service from the first local network and the second service from the second local network. The electronic device is configured to connect to the first service providing device or first local network based on the connectivity information to enjoy the first service and/or connect to the second service providing device or the second local network based on the connectivity information to enjoy the second service. Services from multiple local networks may be consumed simultaneously by the electronic device.

The electronic device may have 3GPP connectivity, non-3GPP connectivity or both and may have other 3GPP or non-3GPP functionality.

It should be appreciated that the electronic device may obtain information how to connect to the service connection information system when the electronic device registers in the local network. The connection information may be retrieved by the electronic device at this stage of may be pushed towards the electronic device. Thereafter, the electronic device may send a service request to the corresponding service connection information system.

Once having received the information from the service connection information system, the electronic device may request the local network to establish the connections. The gateway device of the local network may request assistance from the telecommunication system to establish the connections. When the telecommunication system is part of a 5G telecommunications network, the established connections comprise protocol data unit, PDU, sessions. Once the connections are established, the electronic device can start the uplink and/or downlink data sessions with the selected service providing devices.

Still another aspect of the present disclosure pertains to a system according to claim 16.

A further example of the disclosure relates to a gateway device comprising a service connection information system as disclosed herein.

Further examples of the disclosure relate to methods for operating the service connection information system, the telecommunication system and/or the electronic device.

In particular, an example of the disclosure relates to a method in a service connection information system including the step of storing service profile information regarding at least a first service of a first service providing device in a first local network and, optionally, a second service of a second service providing device in a second local network. The method may also include the step of storing connectivity information for an electronic device to enjoy the first service from the first service providing device in the first local network and, optionally, the second service from the second service providing device in the second local network. Yet another step of the method involves providing the service profile information and connectivity information to the electronic device to enable the electronic device to enjoy the first service and, optionally, the second service.

A further example of the disclosure provides a method in a telecommunications system configured for communication with a service connection information system as disclosed herein. The method comprises the step of provisioning a local network for a customer containing one or more service providing devices. Another step of the method may involve providing service profile information and connectivity information to the service connection information system for the service providing devices in the provisioned local network.

Another example of the disclosure involves a method in an electronic device configured to access the service connection information system as disclosed herein. The method involves the step of receiving service profile information and connectivity information from the service connection information system to enjoy the first service from the first local network and, optionally, the second service from the second local network. The method may also involve the electronic device connecting to the first service providing device or first local network based on the connectivity information to enjoy the first service and/or, optionally, connect to the second service providing device or the second local network based on the connectivity information to enjoy the second service. Another step may be consuming services by the electronic device from multiple local networks simultaneously.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIGS. 1A-1D are schematic illustrations of a 5G telecommunications architecture and some procedures within such architecture;
FIG. 2 is a schematic illustration of local customer networks configured for communication with a 5G telecommunications architecture as shown in FIGS. 1A-1D;
FIGS. 3A-3B are schematic illustrations of an embodiment of a service connection information system for two local customer networks and a procedure to provide information to an electronic device;
FIGS. 4A-4D are schematic illustrations of an embodiment of a service connection information system and some procedures for activating and using the service connection information system; and
FIG. 5 depicts a processing system according to an embodiment for a processing device or a server system.

### DETAILED DESCRIPTION OF THE DRAWINGS

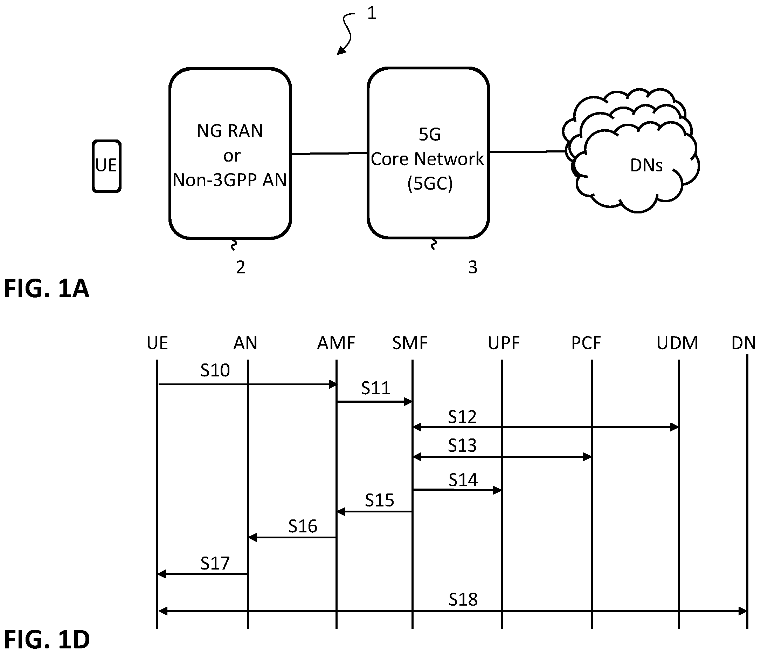

FIG. 1A is a schematic illustration of a prior art 5G telecommunications network 1. The 5G network is composed of a 5G access network 2 and a 5G core network (5GC) 3. The access network is made up of a new-generation radio access network (NG-RAN) which uses the 5G new radio interface (NR). The NG-RAN comprises 5G base stations, referred to as gNB's (not shown) which are connected to the 5GC and to each other. The access network 2 may comprise a non-3GPP access network (e.g. WiFi, xDSL, etc) connecting to the 5GC. Access to the 5GC may also be hybrid. The different network entities are connected by an underlying IP (or other transport technology) transport network. The 5G network architecture is connected to a plurality of data networks DN. Data networks can be the internet, an operator specific network, a dedicated network, etc.

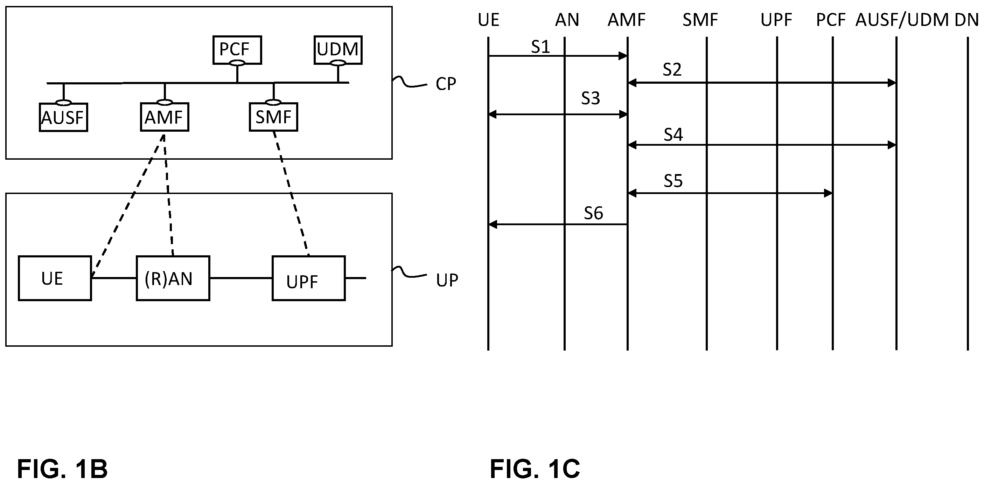

FIG. 1B shows a 5G telecommunications network in a service-based architecture in combination with a user device UE and a (radio) access network (R)AN. The 5G core network 5GC comprises many systems that are defined in terms of network functions (NF) that provide services as sets of interactions between two or more network functions. The upper part of FIG. 1B shows a set of network functions that form the 5G control plane CP.

Amongst others, the control plane comprises an access and mobility management function (AMF) system that handles most signalling coming from and going to the UE. The AMF also interacts with other functions in the control plane. The system performing the access and mobility function AMF has the responsibility of access control and registration of the UE in the 5GC. Such tasks are typically performed prior to allowing the UE to establish a protocol data unit, PDU, session with the 5GC.

The AMF does not handle session management but relays session-related messages to and from a system performing a session management function (SMF), hereinafter referred to as session management system. The session management system performs establishment, modification and release of PDU sessions.

The control plane also comprises a system performing a policy control function (PCF) that provides policy rules (QoS, filtering, charging) to other control plane functions, such as the SMF.

Further functions that are comprised in the control plane CP include the unified data management function (UDM) and/or a unified data repository (UDR), also referred to as unified data management system herein, and the authentication server function (AUSF). The UDM is a front-end function to the UDR for UE-related information, such as credentials, identifiers, AMF details, and SMF PDU sessions. For security reasons, credentials are usually stored directly in the UDM, which is also called ARPF (Authentication credential Repository and Processing Function). UDR is a database that provides access to data offered as services to other network systems, such as the PCF system. The AUSF supports authentication for 3GPP and non-3GPP access.

For the user plane UP, the lower part in FIG. 1B, the UE communicates via the (radio) access network 2, indicated as (R)AN, with a system performing a user plane function (UPF). The main task of the UPF is to process and forward user data. The UPF is controlled by the SMF and connects with external data networks DN. The system performing the session management function SMF has the responsibility for setting up connectivity for the UE toward data networks as well as managing the user plane for that connectivity. To connect to a DN, the UE requests establishment of a protocol data unit session. The PDU is the basic end-user protocol type carried by the PDU session, e.g. IP packets or Ethernet frames. Each PDU session provides an association between the UE and a specific DN.

A UE needs to register with the telecommunications network to get authorized to receive services, to enable mobility tracking and to enable reachability as set out in 3GPP TS 23.502. A few steps of the registration procedure are shown in FIG. 1C.

In step S1, a UE sends a network access request, also referred to as NAS Registration request message to the 5G access network which selects an access and mobility system AMF, if no AMF selection is made in the network access request. The network access request contains, amongst others, a registration type (e.g. initial registration, mobility registration update, or periodic registration update) and a UE identity (e.g. a 5G-GUTI, or SUPI or SUCI). If not yet available, the AMF system may request the SUPI/SUCI from the UE via a NAS message exchange (not shown).

In step S2, the AMF requests UE authentication from a telecommunication system comprising the Authentication Server system AUSF that interacts with the UDM system and receives the authentication information and SUPI at the AMF. In step S3 authentication is arranged with the UE.

In step S4, the AMF interacts with the UDM to register with the UDM and obtain subscription data, including access and mobility subscription data, SMF selection subscription data to create a UE context for the UE in the AMF.

In step S5, a policy and charging system PCF is selected and the AMF interacts with the PCF to create an AM policy association and retrieve a UE policy and access and mobility control policy, wherein the PCF responds with the policy association information.

In step S6, a NAS Registration Accept message, a registration accept message, is sent to the UE.

FIG. 1D is a schematic illustration of some steps of a PDU Session Establishment procedure as set out in more detail in 3GPP TS 23.502, v17.2.0.

In step S10, the UE transmits a PDU Session Establishment Request after the UE is registered with the 5GC sending a registration request to the AMF as shown in figure 1C. The PDU Session Establishment Request is transmitted as a session management container in a NAS message to the AMF. When the access network receives the PDU Session Establishment Request, the NAS message is encapsulated in an N2 message towards the AMF.

The AMF selects an SMF as described in 3GPP TS 23.501 and may either use a DNN provided by the UE or select a (default) DNN using e.g. subscription information from the UDM. In step S11, the AMF sends a message to the SMF containing the PDU Session Establishment Request and other information.

The SMF may also interact with the UDM and PCF based on the data provided by the UE as can be observed from steps S12 and S13 to obtain subscription data and policy rules.

In step S14, the SMF interacts with the UPF to establish a session for the user plane UP.

In step S15, the SMF interacts with the AMF and provides the SM context or updated SM context to the AMF.

In step S16, the AMF sends a N2 PDU Session Setup Request to the appropriate gNB of the access network AN along with N2 session management parameters received from the SMF as QFls, QoS Profile. The transmission from the AMF to the access network AN also includes the NAS message destined to the UE, including session parameters like QoS Rules and UE IP address.

The gNB establishes the tunnel based on the information received from the AMF and sets up a tunnel end point and forwards information to the UE for setting up a PDU session in step S17. The gNB also reports back to the AMF that subsequently informs the SMF about the successful setup of the tunnel.

After this step, the tunnel is established and the PDU session exists between the UE and the UPF allowing data transfer with the DN, indicated by step S18.

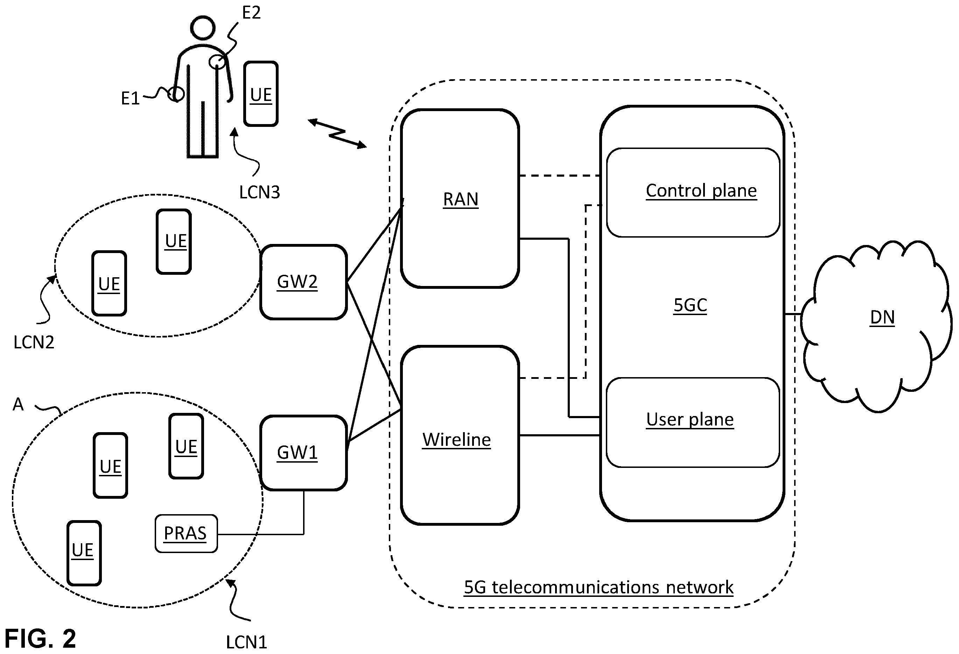

FIG. 2 is a schematic illustration of some local customer networks LCN1, LCN2 and LCN3, such as customer premises networks, CPN, or personal IoT networks, PIN configured for communication with a 5G telecommunications network as described above with reference to FIGS. 1A-1D. It should be appreciated that similar local customer networks may be configured for communication with a 3G or 4G telecommunications network or 6G telecommunications network.

Local customer network LCN1 is a customer premises network CPN that comprises a gateway device GW1 such as a 5G-RG (5G residential gateway) or an eRG (enhanced residential gateway). The gateway device GW1 provides wireless coverage, possibly via a premises radio access station, PRAS in a coverage area A for a plurality of UEs. The gateway device GW1 is connected to the 5GC via a wireline access network or a wireless access network RAN. The gateway device GW1 may connect to the 5GC as a UE in a manner corresponding to FIGS. 1C and 1D interacting with functions in the control plane CP and user plane UP and forwards traffic to and from the UEs in the local network LCN1 via an established PDU session. The gateway device GW1 may assign addresses, e.g. IP addresses, to UEs in the local network LCN1. In this manner, the UEs behind the gateway device GW1 can make use of a single PDU session of the gateway device GW1 for a data network DN without being registered in the 5GC and using the IP address assigned by the telecommunications network to the gateway device GW. When the UE is associated with/connected to the gateway device GW1, using 3GPP (e.g. PRAS) or non-3GPP (e.g. Ethernet, Zigbee, WiFi or Bluetooth, for example), all types of traffic may be routed via the PDU Session of the gateway device GW1 towards the data network DN via a 5G-RAN or via wireline access and the 5GC. Electronic devices UE may also establish individual PDU sessions, possibly within the PDU session of the gateway device GW1.

A second local customer network LCN2 is connected to the telecommunications network via another gateway device GW2. Like for LCN1, gateway device GW2 may assist the UE's in its local network LCN2 to communicate over the 5G telecommunications network. The local customer network LCN2 may be a personal loT network with, for example, various control devices and sensors, shown as UEs in FIG. 2 in LCN2. Although not shown in FIG. 2, connectivity may also exist directly between gateway device GW1 and GW2 thereby avoiding the 5GC.

FIG. 2 also illustrates a third local customer network LCN3, a personal loT network PIN, comprising a PIN element with a gateway support function, here a UE (e.g. a mobile smartphone), in communication with various wearable PIN elements E1 (e.g. a smartwatch) and E2 (e.g. a sensor contained in the clothes of the person). Like for LCN1 and LCN2, the UE in LCN2 may have an established PDU session with the 5GC over the radio access network RAN in FIG. 2, so that the PIN elements E1, E2 may communicate with the 5GC via the UE. It should be appreciated that further local customer networks may be used, such as a PIN network with fixed and mobile PIN elements, such as a household network.

A single customer may deploy multiple local customer networks in the same physical location (e.g. in an office building or in a home) or at different physical locations (e.g. in a home and in an office). The local customer networks may have overlapping coverage and may use different radio frequencies for communication. Some communication may make use of radio frequencies allocated to a telecommunications network connected to these local networks. Other communications may make use of a wireline connection to a gateway device or use a different radio communication technique, such as WiFi or Zigbee. The local networks may be accessible from some locations whereas they are not available from other locations.

Different services may be provided from multiple local customer networks LCN due to, for example, technical reasons, capabilities, subscription level or user preferences. As an example, one local network may provide entertainment services, such as gaming or video stream, whereas another local network may provide home automation services, such as light control or heating control. In some instances, an electronic device UE may want to enjoy services from multiple local networks simultaneously.

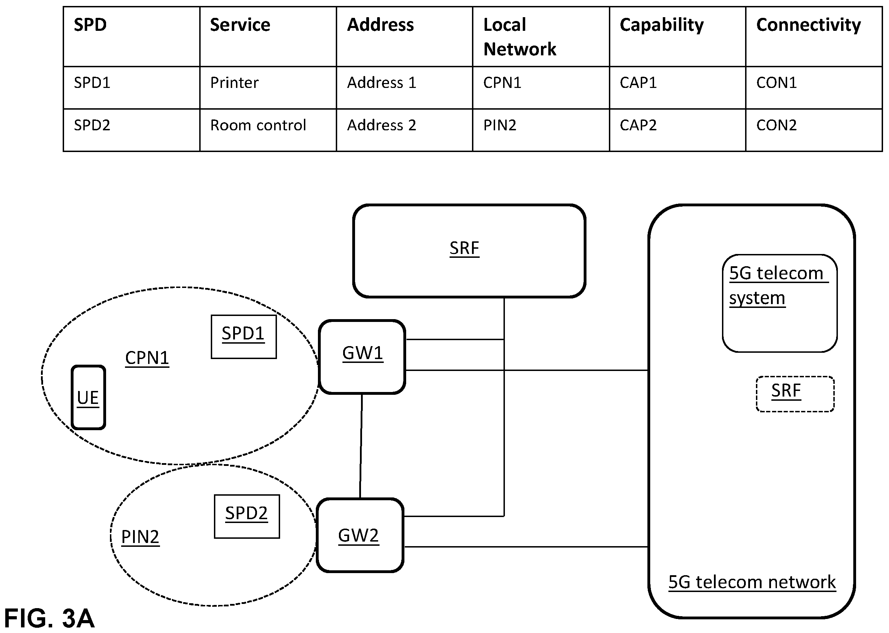

FIG. 3A is a schematic illustration of a customer employing an electronic device UE and owning a first local network and a second local network for a simplified case. The first local network may be a local customer network LCN, here customer premises network CPN1. The second local network may be a local customer network, here a personal loT network, PIN2.

The local networks CPN1, PIN2 are provided by a first gateway device GW1 and a second gateway device GW2, respectively. These gateway devices GW1, GW2, are preferably connected to a telecommunications network, such as a 5G telecommunications network shown in FIG. 3A.

The local network may each contain one or more service providing devices SPD1, SPD2, respectively. Services provided by these service providing devices SPD1, SPD2 can be anything, including entertainment services (e.g. gaming, TV, internet), surveillance services, telepresence services, services of office equipment, climate/energy control services, services from wearables, etc. In FIG. 3A, SPD1 in CPN1 may be a printer and SPD2 in PIN2 may be a room control device.

As shown in FIG. 3A, an electronic device UE may desire to use one or more services for the service providing devices SPD1, SPD2 located in different local networks. Electronic device UE may provide services itself. Likewise, service providing devices SPD may want to enjoy services from other devices in or outside the local network.

As disclosed herein, a service connection information system SRF, for service repository function, may be provisioned for the use of multiple local networks, such as CPN1 and CPN2 in FIG. 3A.

The service connection information system SRF may be configured to store service profile information regarding at least a first service of a first service providing device SPD1 in a first local network CPN1 and, optionally, a second service of a second service providing device SPD2 in a second local network PIN2. The service connection information system SRF may also store connectivity information for an electronic device UE to enjoy the first service from the first service providing device SPD1 in the first local network CPN1 and, optionally, the second service from the second service providing device SPD2 in the second local network PIN2. The service connection information system SRF may further be configured to provide the service profile information and connectivity information to the electronic device UE to enable the electronic device UE to enjoy the first service and, optionally, the second service.

It should be noted that, if the telecommunications network is available, any type of communication with and between local customer networks LCN and the service connection information system can be conducted via the telecommunications network.

The upper part of FIG. 3A shows information stored in the service connection information system SRF. The information, for example embodied in the form of a lookup table, comprises a few exemplary entries, including for each service providing device SPD1, SPD2, the provided service (printer, room control), the address of SPD1 and SPD2 (Address 1, Address 2) which may be MAC or IP addresses, the local network in which the service providing device is located (CPN1, PIN2), capabilities of the service providing devices (CAP1, CAP2) and (further) connectivity information (CON1, CON2), like preferred or required connectivity route options. It should be appreciated that the service connection information system SRF may contain further information. Part of the information may be obtained in the service connection information system SRF from service availability indications transmitted by the service providing devices in the local network, either by push or pull procedures.

In FIG. 3A, the service connection information system SRF is provided at the customer site, for example, in the customer network, such as in a gateway device GW1, GW2, or in a physical server or virtual service at the customer site. Alternatively, the service connection information system SRF may be provided, entirely or in part, in the telecommunications network, as shown by the dashed box SRF in FIG. 3A. Deploying a service connection information system SRF in the telecommunications network enables providing this service to a plurality of customers of the operator of the telecommunications network. Another alternative is that each local network comprises a service connection information system instance, e.g. in each gateway device GW1, GW2, that communicate with each other to function as a service connection information system.

The telecommunications network may contain a telecommunication system configured to provision a local network, such as CPN1 and/or PIN2, for a customer containing one or more service providing devices SPD1 and/or SPD 2. As shown in FIG. 3A, the 5G telecommunications network may contain a 5G telecommunication system. The 5G telecommunications system may contain one or more systems of a 5G architecture as summarized with reference to FIGS 1A-1D, such as the unified data management function (UDM) and/or a unified data repository (UDR), also referred to as unified data management system herein, and an authentication server function (AUSF). The telecommunication system is configured to provide service profile information and connectivity information to the service connection information system SRF for the service providing devices in the provisioned local network CPN1 and/or PIN2, for example when provisioning the local network CPN1 and/or PIN2.

Provisioning of the local network from the telecommunication system includes enabling the necessary connectivity for the local network CPN1 and/or PIN2 including connectivity within the local network (gateway device, service providing devices) and external to the local network (other local networks, telecommunications network, etc). over the telecommunications network. The local network CPN1 and/or PIN2 may be added to the subscription database UDM of the telecommunications network for a particular customer.

Hence, the telecommunication system may assist in configuring and maintaining the service connection information system SRF at the customer site or within the telecommunications network using information available in the telecommunication system. Such information includes the information regarding the service providing devices SPD1, SPD2 and/or the gateway devices GW1, GW1 connecting the local network(s) CPN1, PIN2 to the telecommunications network.

The local network CPN1 may be the first local network of a customer or a further local network. For the first local network of the customer, the telecommunication system may provision the service connection information system SRF at the customer or within the telecommunications network. Provisioning of the service connection information system may entail everything required for it to provide service access, including its connectivity to the telecommunications network, authentication information, control information, functionalities and instantiating and populating the system with already known services as well as the connectivity relations.

When multiple local networks are provisioned, the telecommunication system comprises association information associating the local networks. The association information facilitates identifying local networks belonging to a customer to include services from these networks in the service connection information system. Such association information may, as an example, be a customer ID, that is the same for multiple local customer networks, and that is stored in, for example, the UDM.

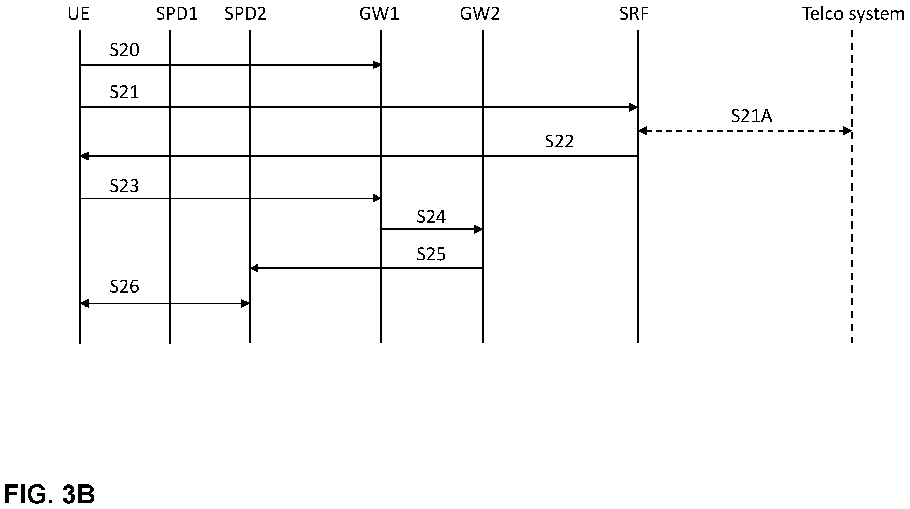

FIG. 3B depicts some steps to provide information from a service connection information system SRF to an electronic device UE and to obtain information by an electronic device UE from a service connection information system SRF.

The electronic device UE is configured to access the service connection information system SRF as disclosed herein. The electronic device UE is configured to receive service profile information and connectivity information from the service connection information system SRF to enjoy the first service from the first local network, CPN1, containing at least service providing device SPD1 and the second service from the second local network, PIN2, containing at least service providing device SPD2. The electronic device UE may be configured to connect to the first service providing device SPD1 or first local network CPN1 (for example via gateway device GW1) based on the connectivity information to enjoy the first service and/or to the second service providing device SPD2 or connect to the second local network PIN2 (for example via gateway device GW2) based on the connectivity information to enjoy the second service. Services from different local networks may be consumed simultaneously by the electronic device UE. The electronic device may have 3GPP connectivity, non-3GPP connectivity or both and may have other 3GPP or non-3GPP functionality.

In a first step S20, the electronic device UE registers in a local network, e.g. by applying for a connection to the first gateway device GW1 in CPN1. The electronic device UE1 may then send a service request to the service connection information system SRF via gateway device GW1 in step S21. Once having received the information from the service connection information system SRF in step S22, the electronic device may request the local network CPN1 to establish the connections via the gateway device GW1 in step S23. The gateway device GW1 of the local network CPN1 may request assistance from the telecommunication system to establish the connections (not shown in FIG. 3B). Using the connectivity information obtained from the service connection information system SRF, the communication route is established via the interconnection between gateway device GW1 and GW2 in steps S24 and S25. Once the connections are established, based on the connectivity information from the SRF, the electronic device UE can start the uplink and/or downlink data sessions with the selected service providing device SPD2.

The connectivity information received from the service connection information system SRF informs the electronic device UE how to connect to a particular local network from which the desired service is provided. The connectivity information may include information that enables a direct device-to-device connection between the electronic device UE and a service providing device, for example service providing device SPD1, providing the service in a local network CPN1. The connectivity information may include information that enables a connection via a local network, for example via a radio station in the local network (such as a Premises Radio Access Station, PRAS) or via a gateway device GW1 providing the local network. For such a connection, the electronic device is in the same local network as the service providing device providing the service. Instead of the interconnection between the gateway devices GW1 and GW2, as described above, the connectivity information may include information enabling a connection via an interconnection between the first local network and the second local network via the telecommunications network connected to the local customer networks CPN1 and PIN2, as shown in FIG. 3A. Such connectivity information enables the electronic device UE to access a service from a local network PIN2 without being in the coverage of the network PIN2.

If, other than shown in FIG. 3A, the electronic device UE would not be in the coverage of any of the local networks of the customer, the connectivity information may include information enabling a connection via a telecommunications network to the second local network PIN2. In this manner, the electronic device UE may enjoy services from service providing device SPD2 in the second local network PIN2 without being in the coverage of both the first local network CPN1 and the second local network PIN2.

The service connection information system SRF is configured for authentication of the electronic device UE before providing the service profile information and connectivity information to the electronic device UE. This protects privacy sensitive information stored in the service connection information system SRF. In one embodiment, the service connection information system itself may be configured to determine whether the electronic device UE is allowed to access information in the service connection information system, i.e. without requiring access to a telecommunications network. The customer may administrate in the service connection information system SRF which electronic device(s) UE is(are) allowed to access the service connection information system SRF.

The service connection information system SRF may be configured to communicate with a telecommunication system in a telecommunications network to enable the authentication as shown in FIG. 3A. Such authentication may be performed in response to the service request in step S21 of FIG. 3B, as shown by step S21A. In this embodiment, the service connection information system SRF may make use of authentication information stored for electronic devices UE in a telecommunication system, for example a subscriber information system, of the telecommunications network. The telecommunication system may store permissions for each electronic device UE.

The service connection information system SRF may be configured to provide the service profile information and the connectivity information to the electronic device UE in accordance with control information. The control information may determine which service profile information and/or which connectivity information is provided to the electronic device UE.

The control information may include customer settings defining which electronic device UE is provided with which information and may be programmed through an interface at the service connection information system. Different electronic devices UE may receive different information in this way. Hence, it is not necessary that each or any electronic device UE is provided with all information stored in the service connection information system SRF or with the same information from this system SRF. Optionally, the control information is stored in the service connection information system to enable the service connection information system SRF itself to perform control of the information it provides to which electronic device.

The service connection information system SRF may receive the control information, or part thereof, from other, external, sources.

The service connection information SRF may be configured to receive the control information from the electronic device UE, for example in step S21 of FIG. 3B with the service request, and to provide the service profile information and the connectivity information to the electronic device UE in accordance with the control information. In this manner, the electronic device UE indicates which information is useful for it to consume at least one service. The control information from the electronic device may, for example, indicate that the electronic device UE requests a complete list of the services provided in the local networks CPN1, PIN2. This option may be set as a default option. It should be appreciated that further control information at the service connection information system SRF may still limit which service profile information and/or connectivity information is provided to the electronic device UE. Another option is that the control information from the electronic device UE in step S21 includes a service description that allows the service connection information system SRF to determine service profile information and/or connectivity information that matches the service description or is most suitable and to provide appropriate information to the electronic device UE. Yet another option includes the electronic device UE to send control information indicating a device status and the service connection information system being configured to provide service profile information and/or connectivity information taking account of the device status, e.g. location and capabilities. As an example, the service connection information system may determine that the capabilities of the service providing device SPD2 do not match the request.

Alternatively, or in addition, the service connection information system SRF may be configured to receive the control information from a telecommunication system and to provide the service profile information and the connectivity information to the electronic device in accordance with the control information. The control information may be provided from the telecommunications system to the service connection information system SRF in step S21A. In this manner, te service connection information system SRF is allowed to cooperate with a telecommunication system in the telecommunications network, such as a subscriber system, to determine the service profile information and/or connectivity information to be provided to the electronic device UE. The control information received from the telecommunication system may be stored for further use, at least for some time interval, to allow determining the information to be provided to the electronic device UE in the absence of good connectivity between the service connection information system SRF and the telecommunications network.

In addition to service profile information and connectivity information, the service connection information system SRF may contain further information, such as the status of service providing devices (available, reachable, secondary information like paper available for a printer SPD1, etc.), accounting and/or auditing information, device capability requirements and coverage information of the first and second local network. Such further information may, for example, be used to determine the service profile information and/or connectivity information to be provided to the electronic device UE. For example, when the service connection information system is aware of the capabilities of the electronic device UE (which may be part of the control information referred to above), the service profile information and connectivity information provided to the electronic device UE are in accordance with the capabilities of the device. Likewise, coverage information of the first and second local networks CPN1 and PIN2 can be used to determine connectivity information to be provided to the electronic device. Status information can be used to determine whether it is useful to provide service profile information of the service provisioning device SPD to the electronic device UE. Accounting and auditing information assist in charging customers and enable insight in how services are run and whether expectations are met.

The service connection information system SRF may be configured to maintain a record of established service connections of electronic devices UE. The service connection information system SRF may detect which and how many connections have been established between all devices UEs and SPDs. The service connection information system SRF may use this information to control providing the service profile information and/or the connectivity information to the electronic devices. As one example, this information enables the service connection information system SRF to control the maximum number of connections and, determine which service profile information and/or connectivity information to provide to further electronic devices UE accordingly. As another example, when the service connection information system SRF is aware of all established service connections, this may be used to respond to a request from an electronic device UE to assist in selecting the appropriate service and/or the associated local network based on certain service descriptions, availability, load of service providing device, etc.

The established service connections, or status thereof, may also be used to determine service impact. The service connection information system SRF may be configured to notify an electronic device UE that a service providing device is experiencing issues or fails to provide a service to enable the electronic device UE to take measures, for example notifying a user of the electronic device of the issue or failure.

From the basic embodiment of FIGS. 3A-3B, the skilled person will recognize that service providing devices SPD may only need to advertise or provide their services to the service connection information system SRF which allows for an efficient use of network resources, particularly in larger local networks or device employments at a customer premise. The service connection information system SRF contains information to connect to service providing devices SPD for electronic devices UE across multiple local customer networks and, as a result, can determine efficient routes for the data traffic. On the other hand, the service connection information system SRF itself needs not be involved in the actual data session traffic between the electronic devices UE and the service providing devices SPD and thus constitutes an efficient and scalable solution for service discovery and service connection. The service connection information system SRF may furthermore provide for access control, including authentication and/or authorization and/or the provision of credentials to the electronic device UE and the gateway device GW and/or service providing device SPD, to enhance security. Access control may be performed from the service connection information system SRF itself or in cooperation with a telecommunications system provided in a telecommunications network connected to the local networks LCN.

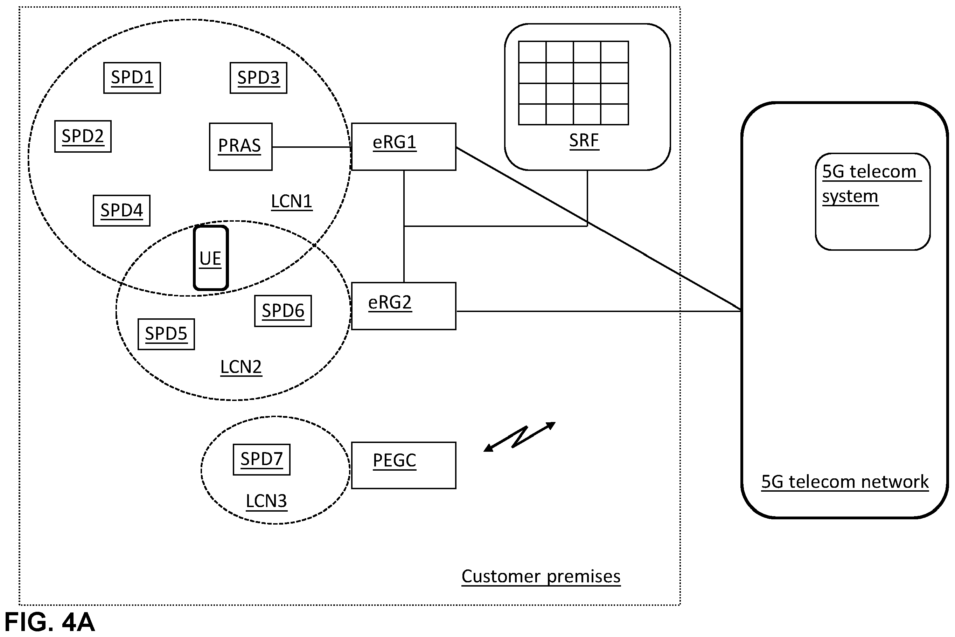

A more elaborate embodiment of the service connection information system SRF and the use thereof will now be described with reference to FIGS. 4A-4D.

At a customer premises, three local networks LCN1, LCN2 and LCN3 are shown. The local networks LCN may support inter-LCN connectivity as shown in FIG. 4A.

LCN1 is shown to comprise four service providing devices SPD1-SPD4 and is connected via an enhanced residential gateway eRG1 to a 5G telecommunications network comprising a 5G telecommunication system. The gateway device eRG1 is connected to a PRAS to extend the coverage of the local area network.

LCN2 is shown to comprise two service providing devices SPD5-SPD6 and is connected via enhanced residential gateway eRG2 to the 5G telecommunications network.

LCN3 is a PIN comprising a service providing device SPD7 and is connected to the 5G telecommunication network via a PIN Element with Gateway Capabilities, PEGC (e.g. a mobile phone). The gateway device PEGC is wirelessly connected to the service connection information system SRF and to eRG2. It should be appreciated that other alternatives are feasible, including the gateway device eRG1 being wirelessly connected to the service connection information system SRF. Moreover, other PIN Elements with Gateway Capability PEGC may be included that have a wired connection to the service connection information system SRF.

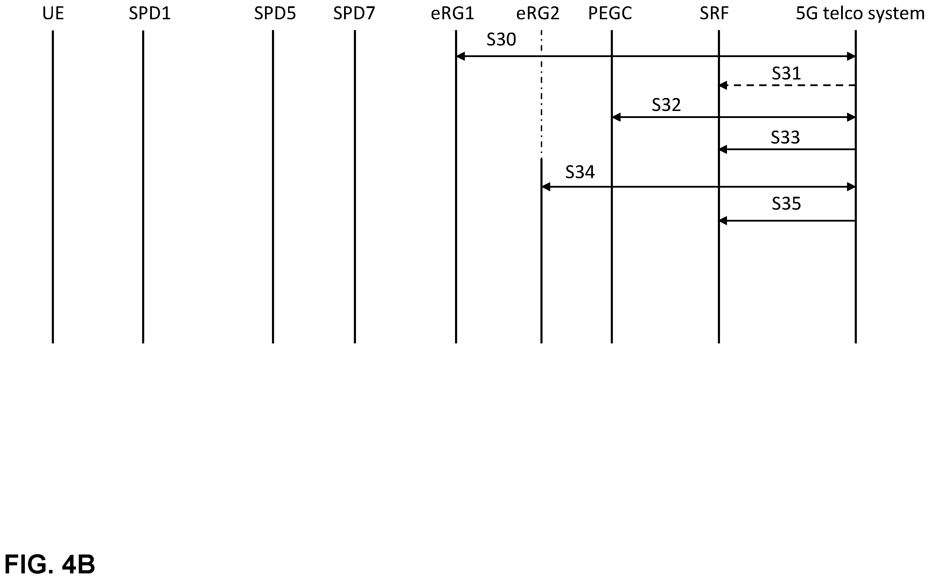

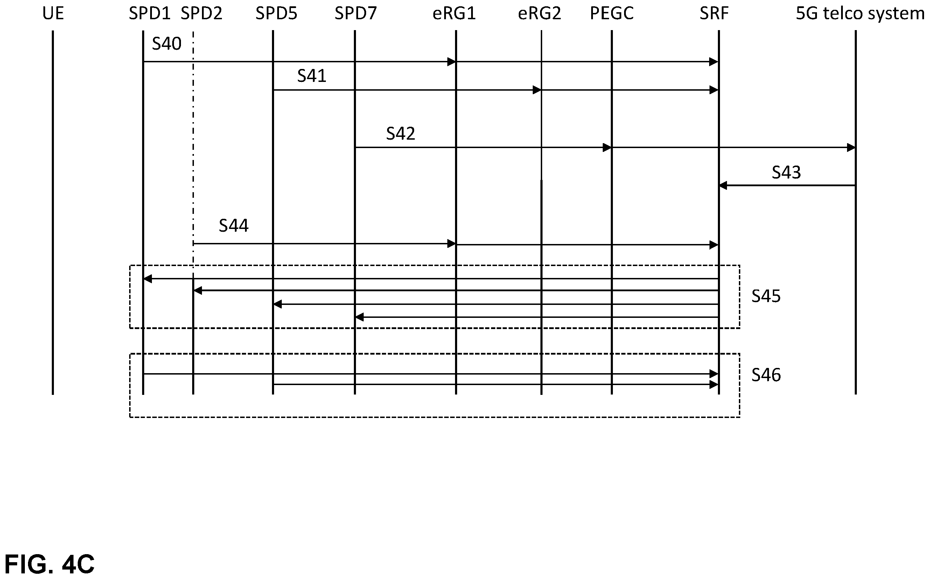

A service connection information system SRF is provided at the customer premises as shown in FIG. 4A. As will be explained in more detail with reference to FIGS. 4B and 4C below, after the initial setup of the service connection information system SRF, the SRF may be (re-)configured or updated automatically whenever an extra local network LCN is provisioned at the premises or a new service providing device SPD with service availability registers to a local network LCN for the first time. The new service providing devices SPD advertise their service descriptions and capabilities to the service connection information system SRF via the local network LCN. Provisioning of the LCN (e.g. enabling the necessary connectivity) and the SRF (e.g. connectivity of the SRF itself, LCN relations, authentication and authorization functionalities) can be supported by the 5G telecommunications system. Alternatively, the local network LCN and/or service connection information system SRF can also be provisioned or configured by an Authorised Administrator of the customer to authenticate and permit any or certain new service(s) or service providing device(s). The customer this way has full control of access rights and can make sure that any electronic device UE (like that of friends or family) can access certain services independent of MNO (Mobile Network Operator) subscription of that electronic device UE.

As explained more briefly for the system of FIGS. 3A-3B, the service connection information system SRF is configured to enable service discovery and service connection by maintaining information on services mapped to the local networks of a customer or group of customers. The information may be stored as a list, for example as a lookup table, containing a repository of service profiles. The service connection information system SRF also contains connectivity information within the local networks LCN and between local networks LCN to inform electronic devices how to connect to one or more services. In addition, the service connection information system SRF may be configured to keep the information up to date, for example by detecting service availability information from service providing devices SPD or by polling, for example periodically, the local network for new service providing devices SPD or new services. On or more of these procedures may also be used by the service connection information system SRF to detect the status of the service providing devices SPD, such as availability and/or reachability.

The service profile information may include a plurality of information items regarding the service providing device SPD and the service(s) it provides. These items include Device ID and Device type (e.g. printer, storage, gaming console, etc) of the service providing device; LCN ID and LCN type (e.g. CPN, PIN) of the local network that contains the service providing device(s) SPD, a device address of each service providing device SPD as well as device capacity information and name(s) of supported service(s). The service profile information may also contain service authorization information of an electronic device UE to ensure that the electronic device UE is authorized to access the service provided by the service device, according to e.g. policy of the device or policy of the customer.

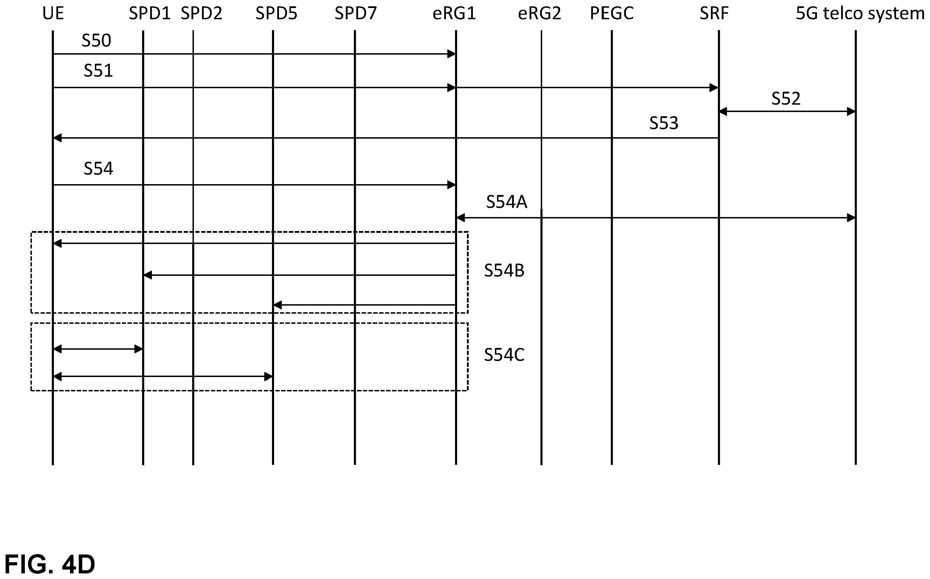

The electronic device UE may be configured to register with a local network, such as LCN1 in FIG. 4A and obtain the information from the service connection information system SRF via push or pull. This procedure is described below in more detail with reference to FIG. 4D. A service request is sent to the service connection information system SRF that may indicate information to be obtained from the service connection information system SRF, such as a request for the complete list of allowed services, a request for the list of allowed services that match certain service descriptions provided as control information by the electronic device UE or a request to the service connection information system SRF to share the most suitable service.

Upon receipt of the information from the service connection information system SRF, the electronic device UE may determine which service to connect to, based on the information provided by the service connection information system SRF. The electronic device may then request the 5G telecommunication system, shown in FIG. 4A, to establish connection to desired services.

Turning now to FIG. 4B, this figure shows some steps of a message flow for setting up the service connection information system SRF.

In step S30, local customer network LCN1 registers to the 5G telecommunication system via enhanced residential gateway device eRG1 and is provisioned by the 5G telecommunications system. This is a current requirement in 3GPP TS 22.261, v18.4.0, section 6.38.2.9. The registration may entail that the local network LCN1 is added to the subscription database of the 5G telecommunications network whereby the 5G telecommunications system keeps track to which customer the local network LCN1 belongs. Provisioning of the LCN may entail enabling all the necessary connectivity within the local network LCN (one or more of the gateway device eRG, PEGC, PRAS, service provisioning devices SPD, etc.) and external to the local network LCN (SRF, other local networks, 5G telecommunications network). UE access rights to an LCN may be provisioned by an authorized administrator of the customer.

Optionally, the service connection information system SRF may be instantiated, provisioned and/or configured with support from the 5G telecommunication system already upon registration of the first local network LCN of a customer, see step S31. However, it is noted that the service connection information system SRF may also be instantiated, provisioned and/or configured only upon or after registration of a second local network for the customer, as shown by steps S32 and S33 for both LCN1 and LCN3. In step S32, local customer network LCN3 registers to the 5G telecommunication system via PEGC and is provisioned by the 5G telecommunications system.

Provisioning of the service connection information system SRF may entail providing everything required for the service connection information system SRF to provide service access across UEs and LCNs, including one or more of the connectivity to all the local networks LCNs and 5G telecommunication system, authentication and authorization functionalities and instantiating and populating the repository with already known services per local network LCN as well as the connectivity relations across the local networks.

The service connection information system SRF may be re-configured and updated for each local network LCN that is added for the customer.

Generally, the service connection information system SRF may be updated when the availability of a (new) local network is detected. For example, in one embodiment, the service connection information system SRF may receive local network availability indications from a telecommunication system and update the corresponding service profile information and/or connectivity information accordingly. Such an indication may result from a provisioning procedure of a local network LCN from the telecommunications network.

The 5G telecommunication system may be configured to detect the establishment of a third local network, LCN2 in FIG. 4A, that is associated with the first and second local networks LCN1 and LCN3 and may then add service profile information and connectivity information to the service connection information system SRF for this third local network LCN2. In FIG. 4B, step S34 indicates registration in the 5G telecommunication system of the local network LCN via enhanced residential gateway eRG2 and step S35 indicates the resulting reconfiguration of the service connection information system SRF from the 5G telecommunication system.

Generally, the service connection information system SRF may be configured to receive service availability indications from service providing devices SPD in the local networks LCN1, LCN2 and/or LCN3. Such service advertising needs only to be transmitted to the service connection information system SRF instead of being multicast in the local network LCN1, LCN2 or LCN3. The transmission of the service availability indication of the service providing device may be triggered by a request, e.g. a polling request (not shown in FIG. 4C), from the service connection information system SRF, for available services/service providing devices SPD in each network. The service connection information system SRF may be updated, for example by updating at least one of the service profile information and the connectivity information in response to the service availability indication for a particular local network LCN. The service providing device SPD may also communicate their capabilities to the service connection information system SRF to enable the service connection information system to provide appropriate service profile information to an electronic device.

Service availability indications may also be received by the service connection information system over the telecommunications network. This may also trigger an update of the information stored in the service connection information system.

FIG. 4C illustrates some steps of a message flow for obtaining, updating and/or maintaining information in the service connection information system SRF of FIG. 4A.

The service connection information system SRF is updated when a new service providing device SPD registers itself in the local network. For example, in step S40, service providing device SPD1 registers itself with eRG1 and advertises the service descriptions and capabilities to the service connection information system SRF for local network LCN1. Likewise, in step S41, the same procedure is followed for registration and update of the service connection information system SRF with regards to service providing device SPD5 of local network LCN2. For LCN3, registration and service advertising is executed by service providing device SPD7 and PEGC in step S42 and the service connection information system SRF is updated via the 5G telecom system in step S43. Such updating via the telecommunications network may be executed when the PEGC is, possibly temporarily, not in the vicinity of the service connection information system SRF, for example because LCN3 is a PIN network with wearable service providing devices SPD and PEGC. Another example includes a case wherein the local networks LCN of a customer are located at different locations so that direct connections to the service connection information system SRF are not feasible or expensive.

When service providing device SPD2 is added later to local network LCN1, it may advertise its services and capabilities at that point in time (step S44) so as to update the information in the service communication system SRF accordingly.

Service providing devices SPD may inform the service connection information system SRF of their status, including availability, reachability, and other secondary information such as paper availability for a printer. FIG. 4C illustrates one procedure of the service connection information system SRF polling known service providing devices SPD1, SPD2, SPD5 and SPD7 in polling step S45 and receiving polling responses only from service providing devices SPD1 in LCN1 and SPD5 in LCN2. SPD2 may be temporarily unreachable (for example because of a device error), whereas SPD7 may be unreachable because it cannot be found. Although not shown in FIG. 4C, polling by the SRF may also be conducted over the 5G telecommunications network.

Similar procedures may exist for updating the service connection information system when removing a service provisioning device SPD from a local network and/or a remove a full local network at the customer.

FIG. 4D schematically illustrates some steps of a message flow for an electronic device UE to request services.

In step S50, the electronic device UE registers with the local network LCN1, possibly via the PRAS (not shown). After eRG1 has accepted the registration, the electronic device UE may send a service request in step S51 via eRG1 to the service connection information system SRF. The service request may contain control information to enable the service connection information system SRF to select appropriate information for the electronic device. The control information may, for example, indicate a request the complete list of allowed services or indicate a request for the list of allowed services that match certain service descriptions that the electric device UE provides.

In step S52, the service connection information system SRF requests support from the 5G telecommunication system to authenticate the electronic device UE that it may set up a connection from the electronic device UE to the service connection information system SRF and to authorize the electronic device UE to connect to the local network LCN or service providing device SPD by receiving credentials for the devices.

In step S53, the service connection information system SRF returns the information in accordance with the control information in the service request. The information includes connectivity information regarding connections that the electronic device UE may establish to each of the services across the local networks LCN1, LCN2 and/or LCN3. The connectivity options may include a direct connection if the electronic device UE is in coverage of the LCNs, such as for LCN1 and LCN2 in FIG. 4A via D2D (PC5), PRAS, eRG (wireline), PEGC or an indirect connection if the electronic device UE is out of coverage via an inter-LCN connection, such as for LCN3 in FIG. 4B if a wireless connection exists between eRG1/eRG2 and PEGC or via the 5G telecommunications network.

In step S54, the electronic device UE may request a connection establishment (e.g. PDU Sessions) to the services it wishes to connect from the 5G telecommunication system via eRG1.

The following procedure may be performed, as an example. In step 54A, a request/response interaction is performed between the eRG1 and the 5G telecommunication system, wherein the 5G telecommunication system shares the required routing policies (e.g. UE Route Selection Policies) for the devices that will have connections established between them to determine how to route outgoing traffic. The eRG1 may also request and receive the service connection credentials from the service connection information system SRF after verifying with the SRF whether the service providing devices hosting the requested services are reachable and available (this information may be obtained as explained with reference to FIG. 4C). The eRG1 may then share the service connection credentials as well as a set of instructions about how to establish the needed connections and routing policies to the electronic device UE and available & reachable service providing devices (SPD1, SPD5) in steps S54B. In step S54C, the electronic device UE may then establish connections (e.g. PDU Sessions) to the service providing devices SPD1 and SPD5. One manner to obtain such connections is in accordance with ATSSS (Access Traffic Steering, Switching and Splitting) where in this scenario connections may be established via three 3GPP access networks simultaneously, shown in steps S54C. In particular, these connections may be formed by a first connection to service providing device SPD1 via PRAS1 or via D2D (PC5), a second connection to service providing device SPD5 via eRG2. The electronic device UE is now simultaneously connected to service providing devices SPD1 and SPD5.

After the connections are established, uplink and downlink data sessions may be executed between electronic device UE and the service providing devices SPD1/SPD5.

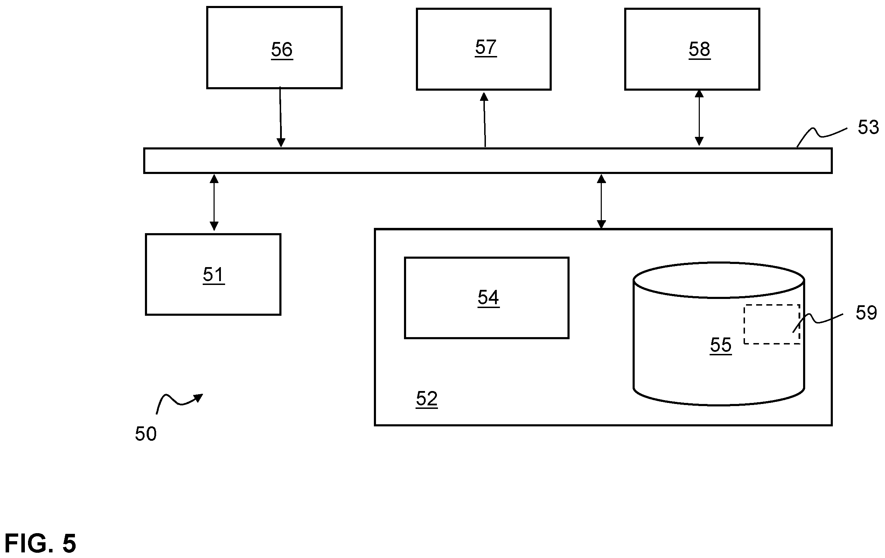

FIG. 5 depicts a block diagram illustrating an exemplary processing system according to a disclosed embodiment, e.g. an electronic device, a service connection information system or a telecommunication system as disclosed herein. As shown in FIG. 5, the processing system 50 may include at least one processor 51 coupled to memory elements 52 through a system bus 53. As such, the processing system may store program code within memory elements 52. Further, the processor 51 may execute the program code accessed from the memory elements 52 via a system bus 53. In one aspect, the processing system may be implemented as a computer system that is suitable for storing and/or executing program code. It should be appreciated, however, that the processing system 50 may be implemented in the form of any system including a processor and a memory that is capable of performing the functions described within this specification.

The memory elements 52 may include one or more physical memory devices such as, for example, local memory 54 and one or more bulk storage devices 55. The local memory may refer to random access memory or other non-persistent memory device(s) generally used during actual execution of the program code. A bulk storage device may be implemented as a hard drive or other persistent data storage device. The processing system 50 may also include one or more cache memories (not shown) that provide temporary storage of at least some program code in order to reduce the number of times program code must be retrieved from the bulk storage device 55 during execution.

Input/output (I/O) devices depicted as an input device 56 and an output device 57 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 5 with a dashed line surrounding the input device 56 and the output device 57). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 58 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 50, and a data transmitter for transmitting data from the processing system 50 to said systems, devices and/or networks. Modems, cable modems, and Ethernet cards are examples of different types of network adapter that may be used with the processing system 50.

As pictured in FIG. 5, the memory elements 52 may store an application 59. In various embodiments, the application 59 may be stored in the local memory 54, the one or more bulk storage devices 55, or apart from the local memory and the bulk storage devices. It should be appreciated that the processing system 50 may further execute an operating system (not shown in FIG. 5) that can facilitate execution of the application 59. The application 59, being implemented in the form of executable program code, can be executed by the processing system 50, e.g., by the processor 51. Responsive to executing the application, the processing system 50 may be configured to perform one or more operations or method steps described herein.

In one aspect of the present invention, one or more components of the electronic device, the service connection information system and/or the telecommunication system as disclosed herein may represent processing system 50 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 51 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A service connection information system (SRF) configured to:
- store service profile information regarding at least a first service of a first service providing device (SPD1) in a first local network (LCN1) and a second service of a second service providing device (SPD2) in a second local network (LCN2);
- store connectivity information for an electronic device (UE) to enjoy the first service from the first service providing device in the first local network and the second service from the second service providing device in the second local network;
- provide the service profile information and connectivity information to the electronic device to enable the electronic device to enjoy the first service and the second service; wherein the first local network is a Personal Internet of Things, loT, Network, PIN, and wherein the connectivity information for enjoying the first service between the first service providing device and the electronic device and for enjoying the second service between the second service providing device and the electronic device includes at least one of the following:
- connectivity information enabling a direct device-to-device connection;
- connectivity information enabling a connection via the first local network respectively the second local network;
- connectivity information enabling a connection via an interconnection between the first local network and the second local network; and
- connectivity information enabling a connection via a telecommunications network to the first local network and a connection via the telecommunications network to the second local network.

2. The service connection information system according to claim 1, wherein the service connection information system is configured for authentication of the electronic device before providing the service profile information and connectivity information to the electronic device, wherein, optionally the service connection information system is configured to communicate with a telecommunication system to enable the authentication.

3. The service connection information system according to one or more of the preceding claims, wherein the service connection information system is configured to provide at least one of the service profile information and the connectivity information to the electronic device in accordance with control information, wherein the control information is, optionally, stored in the service connection information system.

4. The service connection information system according to claim 3, wherein the service connection information system is configured to receive the control information from the electronic device and to provide at least one of the service profile information and the connectivity information to the electronic device in accordance with the control information.

5. The service connection information system according to claim 3, wherein the service connection information system is configured to receive the control information from a telecommunication system and to provide at least one of the service profile information and the connectivity information to the electronic device in accordance with the control information.

6. The service connection information system according to one or more of the preceding claims, wherein the service connection information system is configured to:
- receive service availability indications from service providing devices in the first local network or second local network, wherein, optionally the service connection information system is configured to transmit requests for available service providing devices in at least one of the first local network and second local network to trigger the service availability indications; and/or
- receive local network availability indications or service availability indications from a telecommunication system; and
- update the service profile information and/or connectivity information in response to receiving the service availability indications and/or local network availability indications.

7. The service connection information system according to one or more of the preceding claims, wherein the service connection system is configured to further store and/or receive at least one of the following:
- status of service providing devices
- accounting and/or auditing information
- electronic device capability requirements for one or more services;
- coverage information of the first local network and second local network.

8. The service connection information system according to one or more of the preceding claims, wherein the service connection information system is configured to maintain a record of established service connections of electronic devices.

9. The service connection information system according to one or more of the preceding claims, wherein the service connection information system is provided:
- in an equipment at a customer premise
- in a telecommunications network
- distributed over an equipment at a customer premise and a telecommunications network.

10. A telecommunication system of a telecommunications network configured for communication with a service connection information system (SRF) according to one or more of the preceding claims 1-9, wherein the telecommunication system is configured to:
- provision a first local network (LCN1) containing a first service providing device (SPD1) and a second local network (LCN2) containing a second service providing device (SPD2) for a customer;
- provide service profile information and connectivity information to the service connection information system for the service providing devices in the provisioned local networks,
wherein the first local network is a Personal Internet of Things, IoT, Network, PIN, and wherein the connectivity information includes at least one of the following:
- connectivity information enabling a direct device-to-device connection;
- connectivity information enabling a connection via the first local network respectively the second local network;
- connectivity information enabling a connection via an interconnection between the first local network and the second local network; and
- connectivity information enabling a connection via a telecommunications network to the first local network and a connection via the telecommunications network to the second local network.

11. The telecommunication system according to claim 10, wherein the telecommunication system is configured to provide at least one of:
- an authentication service or authentication information for an electronic device requesting access to the service connection information system;
- a control service to control providing the service profile information and/or connectivity information from the service connection information system to an electronic device.

12. The telecommunication system according to claim 10 or claim 11, wherein the telecommunication system is configured to at least one of:
- instantiate and/or provision the service connection information system if no local network is instantiated and/or provisioned for the customer prior to the first local network;
- update the service connection information system upon detection or removal or addition of a service providing device in the local network.

13. The telecommunication system according to one or more of the claims 10-12, wherein the telecommunication system is configured to provide credentials for the electronic device and the service connection information system to enable providing the service profile information and connectivity information to the electronic device.

14. An electronic device (UE) configured to:
- access a service connection information system according to one or more of the claims 1-9 over the first local network (LCN1) or a telecommunications network;
- receive service profile information and connectivity information from the service connection information system (SRF) to enjoy the first service from the first local network (LCN1) and the second service from the second local network (LCN2),
wherein the first local network is a Personal Internet of Things, loT, Network, PIN, and;
- connect to the first service providing device (SPD1) or first local network based on the connectivity information to enjoy the first service and/or to the second service providing device (SPD2) or second local network based on the connectivity information to enjoy the second service;
wherein the connectivity information for enjoying the first service between the first service providing device and the electronic device and for enjoying the second service between the second service providing device and the electronic device includes at least one of the following:
- connectivity information enabling a direct device-to-device connection;
- connectivity information enabling a connection via the first local network respectively the second local network;
- connectivity information enabling a connection via an interconnection between the first local network and the second local network; and
- connectivity information enabling a connection via a telecommunications network to the first local network and a connection via the telecommunications network to the second local network.

15. A system comprising a combination of:
- a service connection information system (SRF) according to one or more of the claims 1-9 and the telecommunication system according to one or more of the claims 10-13;
- a service connection information system (SRF) according to one or more of the claims 1-9 and the electronic device (UE) according to claim 14;
- a service connection information system (SRF) according to one or more of the claims 1-9, the telecommunication system according to one or more of the claims 10-13 and the electronic device (UE) according to claim 14.

## Patentansprüche

1. Dienstverbindungsinformationssystem (SRF), das konfiguriert ist zum:
- Speichern von Dienstprofilinformation bezüglich mindestens eines ersten Dienstes einer ersten dienstbereitstellenden Vorrichtung (SPD1) in einem ersten lokalen Netzwerk (LCN1) und eines zweiten Dienstes einer zweiten dienstbereitstellenden Vorrichtung (SPD2) in einem zweiten lokalen Netzwerk (LCN2);
- Speichern von Konnektivitätsinformation, damit eine elektronische Vorrichtung (UE) den ersten Dienst von der ersten dienstbereitstellenden Vorrichtung in dem ersten lokalen Netzwerk und den zweiten Dienst von der zweiten dienstbereitstellenden Vorrichtung in dem zweiten lokalen Netzwerk nutzen kann;
- Bereitstellen der Dienstprofilinformation und der Konnektivitätsinformation an die elektronische Vorrichtung, um die elektronische Vorrichtung in die Lage zu versetzen, den ersten Dienst und den zweiten Dienst zu nutzen,
wobei das erste lokale Netzwerk ein persönliches Internet-der-Dinge-Netzwerk, IoT-Netzwerk, PIN, ist, und wobei die Konnektivitätsinformation zum Nutzen des ersten Dienstes zwischen der ersten dienstbereitstellenden Vorrichtung und der elektronischen Vorrichtung und zum Nutzen des zweiten Dienstes zwischen der zweiten dienstbereitstellenden Vorrichtung und der elektronischen Vorrichtung mindestens eines der Folgenden umfasst:
- Konnektivitätsinformation, die eine direkte Gerät-zu-Gerät-Verbindung ermöglicht;
- Konnektivitätsinformation, die eine Verbindung über das erste lokale Netzwerk beziehungsweise das zweite lokale Netzwerk ermöglicht;
- Konnektivitätsinformation, die eine Verbindung über eine Zwischenverbindung zwischen dem ersten lokalen Netzwerk und dem zweiten lokalen Netzwerk ermöglicht; und
- Konnektivitätsinformation, die eine Verbindung über ein Telekommunikationsnetzwerk zu dem ersten lokalen Netzwerk und eine Verbindung über das Telekommunikationsnetzwerk zu dem zweiten lokalen Netzwerk ermöglicht.

2. Dienstverbindungsinformationssystem nach Anspruch 1, wobei das Dienstverbindungsinformationssystem zur Authentifizierung der elektronischen Vorrichtung konfiguriert ist, bevor die Dienstprofilinformation und die Konnektivitätsinformation an die elektronische Vorrichtung bereitgestellt werden, wobei das Dienstverbindungsinformationssystem optional konfiguriert ist, mit einem Telekommunikationssystem zu kommunizieren, um die Authentifizierung zu ermöglichen.

3. Dienstverbindungsinformationssystem nach einem oder mehreren der vorhergehenden Ansprüche, wobei das Dienstverbindungsinformationssystem konfiguriert ist, mindestens eine von der Dienstprofilinformation und der Konnektivitätsinformation gemäß einer Steuerungsinformation an die elektronische Vorrichtung bereitzustellen, wobei die Steuerungsinformation optional in dem Dienstverbindungsinformationssystem gespeichert ist.

4. Dienstverbindungsinformationssystem nach Anspruch 3, wobei das Dienstverbindungsinformationssystem konfiguriert ist, die Steuerungsinformation von der elektronischen Vorrichtung zu empfangen und mindestens eine von der Dienstprofilinformation und der Konnektivitätsinformation gemäß der Steuerungsinformation an die elektronische Vorrichtung bereitzustellen.

5. Dienstverbindungsinformationssystem nach Anspruch 3, wobei das Dienstverbindungsinformationssystem konfiguriert ist, die Steuerungsinformation von einem Telekommunikationssystem zu empfangen und mindestens eine von der Dienstprofilinformation und der Konnektivitätsinformation gemäß der Steuerungsinformation an die elektronische Vorrichtung bereitzustellen.

6. Dienstverbindungsinformationssystem nach einem oder mehreren der vorhergehenden Ansprüche, wobei das Dienstverbindungsinformationssystem konfiguriert ist zum:
- Empfangen von Dienstverfügbarkeitsanzeigen von dienstbereitstellenden Vorrichtungen in dem ersten lokalen Netzwerk oder dem zweiten lokalen Netzwerk, wobei das Dienstverbindungsinformationssystem optional konfiguriert ist, Anfragen nach verfügbaren dienstbereitstellenden Vorrichtungen in mindestens einem von dem ersten lokalen Netzwerk und dem zweiten lokalen Netzwerk zu übertragen, um die Dienstverfügbarkeitsanzeigen auszulösen; und/oder
- Empfangen von Anzeigen der Verfügbarkeit des lokalen Netzwerks oder von Dienstverfügbarkeitsanzeigen von einem Telekommunikationssystem; und
- Aktualisieren der Dienstprofilinformation und/oder der Konnektivitätsinformation als Reaktion auf das Empfangen der Dienstverfügbarkeitsanzeigen und/oder der Anzeigen der Verfügbarkeit des lokalen Netzwerks.

7. Dienstverbindungsinformationssystem nach einem oder mehreren der vorhergehenden Ansprüche, wobei das Dienstverbindungsinformationssystem konfiguriert ist, ferner mindestens eines der Folgenden zu speichern und/oder zu empfangen:
- Status von dienstbereitstellenden Vorrichtungen;
- Abrechnungs- und/oder Prüfinformation;
- Fähigkeitsanforderungen der elektronischen Vorrichtung für einen oder mehrere Dienste;
- Abdeckungsinformation des ersten lokalen Netzwerks und des zweiten lokalen Netzwerks.

8. Dienstverbindungsinformationssystem nach einem oder mehreren der vorhergehenden Ansprüche, wobei das Dienstverbindungsinformationssystem konfiguriert ist, eine Aufzeichnung von hergestellten Dienstverbindungen von elektronischen Vorrichtungen zu führen.

9. Dienstverbindungsinformationssystem nach einem oder mehreren der vorhergehenden Ansprüche, wobei das Dienstverbindungsinformationssystem bereitgestellt ist:
- in einer Ausrüstung an einem Kundenstandort;
- in einem Telekommunikationsnetzwerk;
- verteilt über eine Ausrüstung an einem Kundenstandort und ein Telekommunikationsnetzwerk.

10. Telekommunikationssystem eines Telekommunikationsnetzwerks, konfiguriert zur Kommunikation mit einem Dienstverbindungsinformationssystem (SRF) nach einem oder mehreren der vorhergehenden Ansprüche 1-9, wobei das Telekommunikationssystem konfiguriert ist zum:
- Bereitstellen eines ersten lokalen Netzwerks (LCN1), das eine erste dienstbereitstellende Vorrichtung (SPD1) enthält, und eines zweiten lokalen Netzwerks (LCN2), das eine zweite dienstbereitstellende Vorrichtung (SPD2) enthält, für einen Kunden;
- Bereitstellen von Dienstprofilinformation und Konnektivitätsinformation an das Dienstverbindungsinformationssystem für die dienstbereitstellenden Vorrichtungen in den bereitgestellten lokalen Netzwerken,
wobei das erste lokale Netzwerk ein persönliches Internet-der-Dinge-Netzwerk, IoT-Netzwerk, PIN, ist, und wobei die Konnektivitätsinformation mindestens eines der Folgenden umfasst:
- Konnektivitätsinformation, die eine direkte Gerät-zu-Gerät-Verbindung ermöglicht;
- Konnektivitätsinformation, die eine Verbindung über das erste lokale Netzwerk beziehungsweise das zweite lokale Netzwerk ermöglicht;
- Konnektivitätsinformation, die eine Verbindung über eine Zwischenverbindung zwischen dem ersten lokalen Netzwerk und dem zweiten lokalen Netzwerk ermöglicht; und
- Konnektivitätsinformation, die eine Verbindung über ein Telekommunikationsnetzwerk zu dem ersten lokalen Netzwerk und eine Verbindung über das Telekommunikationsnetzwerk zu dem zweiten lokalen Netzwerk ermöglicht.

11. Telekommunikationssystem nach Anspruch 10, wobei das Telekommunikationssystem konfiguriert ist, mindestens eines der Folgenden bereitzustellen:
- einen Authentifizierungsdienst oder eine Authentifizierungsinformation für eine elektronische Vorrichtung, die Zugriff auf das Dienstverbindungsinformationssystem anfragt;
- einen Steuerungsdienst zum Steuern der Bereitstellung der Dienstprofilinformation und/oder der Konnektivitätsinformation von dem Dienstverbindungsinformationssystem an eine elektronische Vorrichtung.

12. Telekommunikationssystem nach Anspruch 10 oder Anspruch 11, wobei das Telekommunikationssystem konfiguriert ist, mindestens eines der Folgenden auszuführen:
- Instanziieren und/oder Bereitstellen des Dienstverbindungsinformationssystems, wenn kein lokales Netzwerk für den Kunden vor dem ersten lokalen Netzwerk instanziiert und/oder bereitgestellt ist;
- Aktualisieren des Dienstverbindungsinformationssystems bei Erkennung oder Entfernung oder Hinzufügen einer dienstbereitstellenden Vorrichtung in dem lokalen Netzwerk.

13. Telekommunikationssystem nach einem oder mehreren der Ansprüche 10-12, wobei das Telekommunikationssystem konfiguriert ist, Berechtigungsnachweise für die elektronische Vorrichtung und das Dienstverbindungsinformationssystem bereitzustellen, um das Bereitstellen der Dienstprofilinformation und der Konnektivitätsinformation an die elektronische Vorrichtung zu ermöglichen.

14. Elektronische Vorrichtung (UE), konfiguriert zum:
- Zugreifen auf ein Dienstverbindungsinformationssystem nach einem oder mehreren der Ansprüche 1-9 über das erste lokale Netzwerk (LCN1) oder ein Telekommunikationsnetzwerk;
- Empfangen von Dienstprofilinformation und Konnektivitätsinformation von dem Dienstverbindungsinformationssystem (SRF), um den ersten Dienst von dem ersten lokalen Netzwerk (LCN1) und den zweiten Dienst von dem zweiten lokalen Netzwerk (LCN2) zu nutzen,
wobei das erste lokale Netzwerk ein persönliches Internet-der-Dinge-Netzwerk, IoT-Netzwerk, PIN, ist, und
- Verbinden mit der ersten dienstbereitstellenden Vorrichtung (SPD1) oder dem ersten lokalen Netzwerk basierend auf der Konnektivitätsinformation, um den ersten Dienst zu nutzen, und/oder mit der zweiten dienstbereitstellenden Vorrichtung (SPD2) oder dem zweiten lokalen Netzwerk basierend auf der Konnektivitätsinformation, um den zweiten Dienst zu nutzen;
wobei die Konnektivitätsinformation zum Nutzen des ersten Dienstes zwischen der ersten dienstbereitstellenden Vorrichtung und der elektronischen Vorrichtung und zum Nutzen des zweiten Dienstes zwischen der zweiten dienstbereitstellenden Vorrichtung und der elektronischen Vorrichtung mindestens eines der Folgenden umfasst:
- Konnektivitätsinformation, die eine direkte Gerät-zu-Gerät-Verbindung ermöglicht;
- Konnektivitätsinformation, die eine Verbindung über das erste lokale Netzwerk beziehungsweise das zweite lokale Netzwerk ermöglicht;
- Konnektivitätsinformation, die eine Verbindung über eine Zwischenverbindung zwischen dem ersten lokalen Netzwerk und dem zweiten lokalen Netzwerk ermöglicht; und
- Konnektivitätsinformation, die eine Verbindung über ein Telekommunikationsnetzwerk zu dem ersten lokalen Netzwerk und eine Verbindung über das Telekommunikationsnetzwerk zu dem zweiten lokalen Netzwerk ermöglicht.

15. System, umfassend eine Kombination aus:
- einem Dienstverbindungsinformationssystem (SRF) nach einem oder mehreren der Ansprüche 1-9 und dem Telekommunikationssystem nach einem oder mehreren der Ansprüche 10-13;
- einem Dienstverbindungsinformationssystem (SRF) nach einem oder mehreren der Ansprüche 1-9 und der elektronischen Vorrichtung (UE) nach Anspruch 14;
- einem Dienstverbindungsinformationssystem (SRF) nach einem oder mehreren der Ansprüche 1-9, dem Telekommunikationssystem nach einem oder mehreren der Ansprüche 10-13 und der elektronischen Vorrichtung (UE) nach Anspruch 14.

## Revendications

1. Système d'informations de connexion aux services (SRF) configuré pour :
- stocker des informations de profil de service concernant au moins un premier service d'un premier dispositif de fourniture de service (SPD1) dans un premier réseau local (LCN1) et un second service d'un second dispositif de fourniture de service (SPD2) dans un second réseau local (LCN2) ;
- stocker des informations de connectivité pour qu'un dispositif électronique (UE) profite du premier service provenant du premier dispositif de fourniture de service dans le premier réseau local et du second service provenant du second dispositif de fourniture de service dans le second réseau local ;
- fournir les informations de profil de service et les informations de connectivité au dispositif électronique pour permettre au dispositif électronique de profiter du premier service et du second service ;
dans lequel le premier réseau local est un réseau Internet des objets, IoT, personnel, PIN, et dans lequel les informations de connectivité pour profiter du premier service entre le premier dispositif de fourniture de service et le dispositif électronique et pour profiter du second service entre le second dispositif de fourniture de service et le dispositif électronique incluent au moins l'un des éléments suivants :
- des informations de connectivité permettant une connexion directe de dispositif à dispositif ;
- des informations de connectivité permettant une connexion via le premier réseau local ou bien le second réseau local ;
- des informations de connectivité permettant une connexion via une interconnexion entre le premier réseau local et le second réseau local ; et
- des informations de connectivité permettant une connexion via un réseau de télécommunications au premier réseau local et une connexion via le réseau de télécommunications au second réseau local.

2. Système d'informations de connexion aux services selon la revendication 1, dans lequel le système d'informations de connexion aux services est configuré pour authentifier le dispositif électronique avant de fournir les informations de profil de service et les informations de connectivité au dispositif électronique, dans lequel, facultativement, le système d'informations de connexion aux services est configuré pour communiquer avec un système de télécommunication pour activer l'authentification.

3. Système d'informations de connexion aux services selon l'une ou plusieurs des revendications précédentes, dans lequel le système d'informations de connexion aux services est configuré pour fournir au moins l'une des informations de profil de service et les informations de connectivité au dispositif électronique conformément aux informations de commande, dans lequel les informations de commande sont, facultativement, stockées dans le système d'informations de connexion aux services.

4. Système d'informations de connexion aux services selon la revendication 3, dans lequel le système d'informations de connexion aux services est configuré pour recevoir les informations de commande provenant du dispositif électronique et pour fournir au moins l'une des informations de profil de service et des informations de connectivité au dispositif électronique conformément aux informations de commande.

5. Système d'informations de connexion aux services selon la revendication 3, dans lequel le système d'informations de connexion aux services est configuré pour recevoir les informations de commande provenant d'un système de télécommunication et pour fournir au moins l'une des informations de profil de service et des informations de connectivité au dispositif électronique conformément aux informations de commande.

6. Système d'informations de connexion aux services selon l'une ou plusieurs des revendications précédentes, dans lequel le système d'informations de connexion aux services est configuré pour :
- recevoir des indications de disponibilité de service provenant de dispositifs de fourniture de service dans le premier réseau local ou second réseau local, dans lequel, facultativement, le système d'informations de connexion aux services est configuré pour transmettre des demandes de dispositifs de fourniture de service disponibles dans au moins l'un parmi le premier réseau local et second réseau local pour déclencher les indications de disponibilité de service ; et/ou
- recevoir des indications de disponibilité de réseau local ou des indications de disponibilité de service provenant d'un système de télécommunication ; et
- mettre à jour les informations de profil de service et/ou les informations de connectivité en réponse à la réception des indications de disponibilité du service et/ou des indications de disponibilité de réseau local.

7. Système d'informations de connexion aux services selon une ou plusieurs des revendications précédentes, dans lequel le système de connexion aux services est configuré pour stocker et/ou recevoir en outre au moins l'un des éléments suivants :
- état des dispositifs de fourniture de services
- informations comptables et/ou d'audit
- exigences de capacité des dispositifs électroniques pour un ou plusieurs services ;
- informations de couverture du premier réseau local et second réseau local.

8. Système d'informations de connexion aux services selon l'une ou plusieurs des revendications précédentes, dans lequel le système d'informations de connexion aux services est configuré pour maintenir un enregistrement des connexions de service établies de dispositifs électroniques.

9. Système d'informations de connexion aux services selon l'une ou plusieurs des revendications précédentes, dans lequel le système d'informations de connexion aux services est fourni :
- dans un équipement chez le client
- dans un réseau de télécommunications
- réparti sur un équipement chez le client et un réseau de télécommunications.

10. Système de télécommunication d'un réseau de télécommunication configuré pour communiquer avec un système d'informations de connexion aux services (SRF) selon l'une ou plusieurs des revendications 1-9 précédentes, dans lequel le système de télécommunication est configuré pour :
- provisionner un premier réseau local (LCN1) contenant un premier dispositif de fourniture de service (SPD1) et un second réseau local (LCN2) contenant un second dispositif de fourniture de service (SPD2) pour un client ;
- fournir des informations de profil de service et des informations de connectivité au système d'informations de connexion aux services pour les dispositifs de fourniture de service dans les réseaux locaux provisionnés,
dans lequel le premier réseau local est un réseau Internet des objets, IoT, personnel, PIN, et
dans lequel les informations de connectivité incluent au moins l'un des éléments suivants :
- des informations de connectivité permettant une connexion directe de dispositif à dispositif ;
- des informations de connectivité permettant une connexion via le premier réseau local ou bien le second réseau local ;
- des informations de connectivité permettant une connexion via une interconnexion entre le premier réseau local et le second réseau local ; et
- des informations de connectivité permettant une connexion via un réseau de télécommunications au premier réseau local et une connexion via le réseau de télécommunications au second réseau local.

11. Système de télécommunication selon la revendication 10, dans lequel le système de télécommunication est configuré pour fournir au moins l'un parmi :
- un service d'authentification ou une information d'authentification pour un dispositif électronique demandant l'accès au système d'informations de connexion aux services ;
- un service de commande pour commander la fourniture des informations de profil de service et/ou des informations de connectivité provenant du système d'informations de connexion aux services à un dispositif électronique.

12. Système de télécommunication selon la revendication 10 ou la revendication 11, dans lequel le système de télécommunication est configuré pour au moins l'un parmi :
- instancier et/ou provisionner le système d'informations de connexion aux services si aucun réseau local n'est instancié et/ou provisionné pour le client avant le premier réseau local ;
- mettre à jour le système d'informations de connexion aux services lors de la détection ou de la suppression ou de l'ajout d'un dispositif de fourniture de service dans le réseau local.

13. Système de télécommunication selon l'une ou plusieurs des revendications 10-12, dans lequel le système de télécommunication est configuré pour fournir des identifiants pour le dispositif électronique et le système d'informations de connexion aux services pour permettre de fournir les informations de profil de service et les informations de connectivité au dispositif électronique.

14. Dispositif électronique (UE) configuré pour :
- accéder à un système d'informations de connexion aux services selon une ou plusieurs des revendications 1-9 sur le premier réseau local (LCN1) ou un réseau de télécommunications ;
- recevoir des informations de profil de service et des informations de connectivité provenant du système d'informations de connexion aux services (SRF) pour bénéficier du premier service provenant du premier réseau local (LCN1) et du second service provenant du second réseau local (LCN2),
dans lequel le premier réseau local est un réseau Internet des objets, IoT, personnel, PIN, et ;
- se connecter au premier dispositif de fourniture de service (SPD1) ou premier réseau local sur la base des informations de connectivité pour bénéficier du premier service et/ou au second dispositif de fourniture de service (SPD2) ou second réseau local sur la base des informations de connectivité pour bénéficier du second service ;
dans lequel les informations de connectivité pour bénéficier du premier service entre le premier dispositif de fourniture de service et le dispositif électronique et pour bénéficier du second service entre le second dispositif de fourniture de service et le dispositif électronique incluent au moins l'un des éléments suivants :
- des informations de connectivité permettant une connexion directe de dispositif à dispositif ;
- des informations de connectivité permettant une connexion via le premier réseau local ou bien le second réseau local ;
- des informations de connectivité permettant une connexion via une interconnexion entre le premier réseau local et le second réseau local ; et
- des informations de connectivité permettant une connexion via un réseau de télécommunications au premier réseau local et une connexion via le réseau de télécommunications au second réseau local.

15. Système comprenant une combinaison de :
- un système d'informations de connexion aux services (SRF) selon une ou plusieurs des revendications 1-9 et le système de télécommunication selon une ou plusieurs des revendications 10-13 ;
- un système d'informations de connexion aux services (SRF) selon l'une ou plusieurs des revendications 1-9 et le dispositif électronique (UE) selon la revendication 14 ;
- un système d'informations de connexion aux services (SRF) selon une ou plusieurs des revendications 1-9, le système de télécommunication selon une ou plusieurs des revendications 10-13 et le dispositif électronique (UE) selon la revendication 14.
